(19) Europäisches Patentamt
European Patent Office
Office européen des brevets

(11) EP 1 256 931 A1

(12) **EUROPEAN PATENT APPLICATION**

(43) Date of publication:
**13.11.2002 Bulletin 2002/46**

(51) Int Cl.[7]: **G10L 13/04**, G10L 13/02, G10L 13/08

(21) Application number: **01401203.3**

(22) Date of filing: **11.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicants:
- **Sony France S.A.**
  **92110 Clichy (FR)**
- **Sony Corporation**
  **Tokyo 141-0001 (JP)**

(72) Inventors:
- **Oudeyer, Pierre-Yves**
  **75005 Paris (FR)**
- **Sabe, Kotaro**
  **Shinagawa-ku, Tokyo 141-0001 (JP)**

(74) Representative: **Bertrand, Didier et al**
**c/o S.A. FEDIT-LORIOT & AUTRES**
**CONSEILS EN PROPRIETE INDUSTRIELLE**
**38, Avenue Hoche**
**75008 Paris (FR)**

(54) **Method and apparatus for voice synthesis and robot apparatus**

(57) A robot apparatus (1) is capable of audibly expressing an emotion in a manner similar to that performed by a living animal. The robot apparatus (1) utters a sentence by means of voice synthesis by performing a process including the steps of: an emotional state discrimination step (S1) for discriminating an emotional state of an emotion model (73); a sentence output step (S2) for outputting a sentence representing a content to be uttered in the form of a voice; a parameter control step (S3) for controlling a parameter for use in voice synthesis, depending upon the emotional state discriminated in the emotional state discrimination step (S1); and a voice synthesis step (S4) for inputting, to a voice synthesis unit, the sentence output in the sentence output step (S2) and synthesizing a voice in accordance with the controlled parameter.

FIG. 1

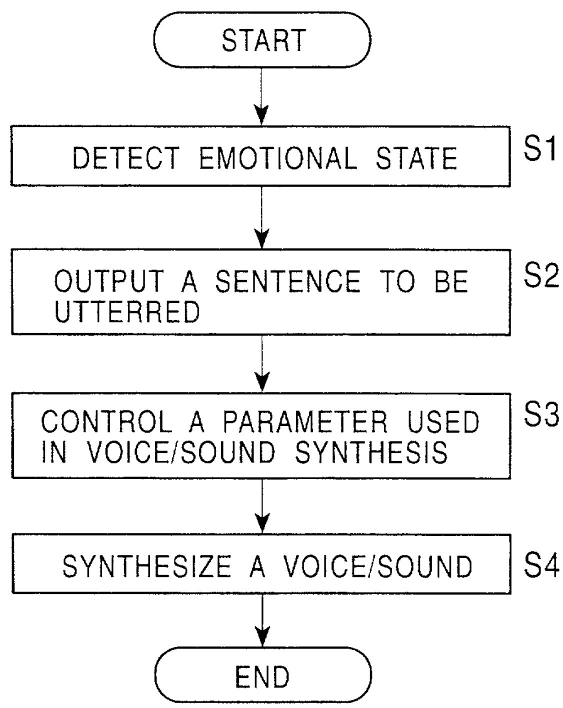


EP 1 256 931 A1

## Description

1. Field of the Invention

The present invention relates to a method and apparatus for synthesizing a voice to be outputted by an apparatus, and to a robot apparatus capable of outputting a voice.

2. Description of the Related Art

In recent years, a pet robot having an external shape similar to that of a pet such as a dog or cat has become commercially available. Some of such robot apparatuses can autonomously act in response to information from the outside and in accordance with the internal state.

In such robot apparatuses, artificial intelligence is used to artificially realize intelligent functions such as inference and decision. Efforts are also being made to artificially realize other functions such as that associated with emotion, instinct, and the like. A voice is one of examples of audible/visual expression means for use in artificial intelligence to make an expression to the outside.

In such a robot apparatus, it is effective to provide a function of uttering a voice to inform a human being (such as a user of the robot apparatus) of emotion of the robot apparatus. This can be understood from the fact that in the case of an actual pet such as a dog and cat, one can understand whether the dog or cat is in a good or bad mood on the basis of a voice uttered by the pet, although one cannot understand what the pet is saying.

Some of commercially available robot apparatuses have a capability of making an audible expression by means of an electronic sound. More specifically, a short and high-pitch sound is generated to express a joy, and, conversely, a long and low-pitch sound is used to express sadness. Those electronic sounds are composed and classified subjectively by a human being into emotional classes in advance, and reproduced as required. Herein, the term "emotional class" is used to describe an emotional class such as happiness, anger, etc. However, emotional expressions using electronic audible sounds according to the conventional techniques are greatly different from emotional expressions made by actual pets such as a dog and a cat in the following points:

(i) they are mechanical,
(ii) the same expression is repeated again and again, and
(iii) the power of expression is low or unsuitable.

Thus, it is desirable to reduce the above differences.

In view of the above, it is an object of the present invention to provide a method and apparatus for synthesizing a voice to audibly express emotion similar to an actual expression made by a living pet. It is another object of the present invention to provide a robot apparatus capable of synthesizing a voice in such a manner.

## SUMMARY OF THE INVENTION

According to an aspect of the present invention, to achieve the above objects, there is provided a voice synthesis method comprising the steps of: discriminating an emotional state of an emotion model of an apparatus having a capability of uttering; outputting a sentence representing a content to be uttered in the form of a voice; controlling a parameter for use in voice synthesis, depending upon the emotional state discriminated in the emotional state discrimination step; and inputting, to a voice synthesis unit, the sentence output in the sentence output step and synthesizing a voice in accordance with the controlled parameter.

In this voice synthesis method, a sentence to be uttered by the apparatus having the capability of uttering is generated in accordance with the voice synthesis parameter which is controlled depending upon the emotional state of the emotion model of the apparatus having the capability of uttering.

According to another aspect of the present invention, there is provided a voice synthesis apparatus comprising: emotional state discrimination means for discriminating an emotional state of an emotion model of an apparatus having a capability of uttering; sentence output means for outputting a sentence representing a content to be uttered in the form of a voice; parameter control means for controlling a parameter used in voice synthesis depending upon the emotional state discriminated by the emotional state discrimination means; and voice synthesis means which receives the sentence output from the sentence output means and synthesizes a voice in accordance with the controlled parameter.

In the voice synthesis apparatus constructed in the above-described manner, the parameter used in voice synthesis is controlled by the parameter control means depending upon the emotional state discriminated by the emotional state discrimination means for discriminating the emotional state of the emotion model of the apparatus having the capability of uttering, and the voice synthesis means synthesizes a voice corresponding to the sentence supplied from the sentence output means in accordance with the controlled parameter. Thus, the voice synthesis apparatus generates a sentence uttered by the apparatus having the capability of uttering in accordance with the voice synthesis parameter controlled in accordance with the emotional state of the emotion model of the apparatus having the capability of uttering.

According to still another aspect of the present invention, to achieve the above-described objects, there is provided a robot apparatus comprising: an emotion model which causes an action of the robot apparatus; emotional state discrimination means for discriminating an emotional state of an emotion model; sentence output means for outputting a sentence representing a content to be uttered in the form of a voice; parameter control means for controlling a parameter used in voice synthesis depending upon the emotional state discriminated by the emotional state discrimination means; and voice synthesis means which receives the sentence output from the sentence output means and synthesizes a voice in accordance with the controlled parameter.

In the robot apparatus constructed in the above-described manner, the parameter used in voice synthesis is controlled by the parameter control means depending upon the emotional state discriminated by the emotional state discrimination means for discriminating the emotional state of the emotion model which causes the action, and the voice synthesis means synthesizes a voice corresponding to the sentence supplied from the sentence output means in accordance with the controlled parameter. Thus, the robot apparatus generates a sentence uttered by the apparatus having the capability of uttering in accordance with the voice synthesis parameter controlled in accordance with the emotional state of the emotion model of the apparatus having the capability of uttering.

## BRIEF DESCRIPTION OF THE DRAWINGS

The above and the other objects, features and advantages of the present invention will be made apparent from the following description of the preferred embodiments, given as non-limiting examples, with reference to the accompanying drawings, in which:

Fig. 1 is a flow chart illustrating a basic flow of a voice synthesis method according to an embodiment of the present invention;
Fig. 2 is a graph illustrating the relationship between the pitch and the duration for some phonemes;
Fig. 3 illustrates a first half part of a program for producing a sentence to be uttered by means of voice synthesis;
Fig. 4 illustrates the remaining part of the program for producing a sentence to be uttered by means of voice synthesis;
Fig. 5 is a diagram illustrating the relationship among various emotional classes in a feature space or an action plane;
Fig. 6 is a perspective view illustrating the external appearance of a robot apparatus according to an embodiment of the present invention;
Fig. 7 is a block diagram illustrating a circuit configuration of the robot apparatus;
Fig. 8 is a block diagram illustrating a software configuration of the robot apparatus;
Fig. 9 is a block diagram illustrating a configuration of a middleware layer in the software configuration of the robot apparatus;
Fig. 10 is a block diagram illustrating a configuration of an application layer in the software configuration of the robot apparatus;
Fig. 11 is a block diagram illustrating a configuration of an action model library in the application layer;
Fig. 12 is a diagram illustrating a finite probability automaton for providing information used in determination of the action of robot apparatus;
Fig. 13 illustrates an example of a state transition table provided for each node of the finite probability automaton; and
Fig. 14 illustrates an example of a state transition table used in an utterance action model.

## DESCRIPTION OF THE PREFERRED EMBODIMENTS

Before describing a method and apparatus for voice synthesis and a robot apparatus according to preferred embodiments of the present invention, usefulness of providing a capability of expressing emotion by means of a voice to a pet robot and a desirable manner of expressing emotion by means of a voice are first described.

(1) Emotional Expression by Means of Voice

In a robot apparatus, a function of uttering a voice with an emotional expression is very effective to establish a good relationship between the robot apparatus and a human user. In addition to the enhancement in good relationship, expression of satisfaction or dissatisfaction can also stimulate the human user and can give a motivation to him/her to respond or react to the emotional expression of the robot apparatus. In particular, such a function is useful in a robot apparatus having a learning capability.

Investigations on whether there is correlation between emotion and the acoustic characteristic of a voice of human beings have been made and reported by many investigators, such as Fairbanks (Fairbanks G. (1940), "Recent experimental investigations of vocal pitch in speech", Journal of the Acoustical Society of America, (11), 457-466), and Burkhardt et al. (Burkhardt F. And Sendlmeier W. F., "Verification of Acoustic Correlates of Emotional Speech using Formant Synthesis", ISCA Workshop on Speech and Emotion, Belfast, 2000).

These investigations have revealed that the acoustic characteristic of a voice has correlation with psychological conditions and some basic emotional classes. However, there is no significant difference in acoustic characteristic of a voice among particular emotions such as surprise, fear, and tediousness. A particular emotion has a close relation with a physical state, and such a physical state can results in an easily predictable effect upon a voice.

For example, when one feels anger, fear or joy, a sympathetic nervous system is excited, and heartbeats become faster and the blood pressure increases. The inside of a mouth becomes dry and, in some cases, a muscle vibrates. In such a state, the voice becomes loud and quick. Such a voice has a high energy distribution in a high-frequency range. Conversely, when one feels sadness or tediousness, a parasympathetic nervous system is excited, and heartbeats become slow, the blood pressure decreases, and the inside of the mouth becomes wet. As a result, the voice becomes slow and the pitch decreases. The physical features described above do not depend upon the race. That is, the correlation between the basic emotion and the acoustic characteristic of the voice is essential and does not depend upon the race.

Experimental investigations upon whether, when a series of meaningless words is uttered in an emotional fashion by Japanese and American persons, the emotional state can be understood or not have been made and reported by Abelin and et al. (Abelin A., Allwood J., "Cross Linguistic Interpretation of Emotional Prosody", Workshop on Emotions in Speech, ISCA Workshop on Speech and Emotion, Belfast 2000) and Tickle (Tickle A., "English and Japanese Speaker's Emotion Vocalizations and Recognition; A Comparison Highlighting Vowel Quality", SCA Workshop on Speech and Emotion, Belfast 2000). These investigations have revealed that:

(i) The difference in language does not result in a difference in the recognition rate.
(ii) The recognition rate is not very high and is about 60%.

From the above investigation results, it can be concluded that communication between a human being and a robot apparatus via a meaningless word is possible, although the expected recognition rate is not very high and is about 60%. Furthermore, it is possible to synthesize an utterance on the basis of a model built in accordance with the correlation between the emotion and the acoustic characteristic.

In the present embodiment of the invention, a voice is uttered so as to have such an acoustic characteristic thereby expressing a desired emotion. Furthermore, in the present embodiment of the invention, a voice is uttered in the following manner:

(i) a voice is uttered like a speech;
(ii) a meaningless word is uttered, and
(iii) a voice is uttered in a different fashion each time it is uttered.

Fig. 1 is a flow chart illustrating a basic flow of a voice synthesis method according to an embodiment of the present invention. Herein, the apparatus having the capability of uttering is assumed to be a robot apparatus having at least an emotion model, voice synthesis means, and voice uttering means. However, the apparatus having the capability of uttering is not limited to a robot apparatus of such a type, but the invention may also be applied to various types of robots and computer artificial intelligence. The emotion model will be described in detail later.

Referring to Fig. 1, in a first step S1, the emotional state of the emotion model of the apparatus having the capability of uttering is discriminated. More specifically, the state (emotional state) of the emotion model changes depending upon, for example, an environmental or internal state (external or internal factor), and thus, in step S1, it is determined which one of states, such as calm, angry, sad, happy, comfortable states, the emotion is in.

In the robot apparatus, the action model includes a probabilistic state transition model (for example, a model having a state transition table which will be described later). Each state of the probabilistic state transition model has a transition probability table which defines a transition probability depending upon the cognition result or the value of emotion or instinct. The state of the probabilistic state transition model changes to another state in accordance with a probability defined in the transition probability table, and an action related to that state transition is outputted.

Actions of expressing emotion such as an expression of happiness or sadness are described in the probabilistic state transition model (transition probability table), wherein the actions of expressing emotion include an emotional expression by means of a voice (utterance). That is, in the present embodiment, an emotional expression is one of actions determined by the action model in accordance with a parameter representing an emotional state of the emotion model, wherein the discrimination of the emotional state is performed as one of functions of an action determining unit.

Note that the present invention is not limited to the specific example described above. What is essential in step S1 is that the emotional state of the emotion model is discriminated in preparation for voice synthesis in a later step to express the discriminated emotional state by means of a voice.

In the following step S2, a sentence representing a content to be uttered in the form of a voice is outputted. This step S2 may be performed before step S1 or after step S3 which will be described later. A new sentence may be produced each time it is outputted or a sentence may be randomly selected from a plurality of sentences prepared in advance. However, in the present embodiment of the invention, the sentence should have a meaningless content, because, in contrast to meaningful dialogs which are difficult to produce, meaningless sentences can be easily produced by a simply-configured robot apparatus, and addition of emotional expressions allows meaningless sentences to seem to be realistic dialogs. Besides, a meaningless word can stimulate imaginative curiosity of a human user who listens to that word and can offer closer friendship than can be obtained by a meaningful but unsuitable sentence. Furthermore, if a sentence is generated or selected in a random fashion, a voice uttered by means of voice synthesis becomes different each time it is uttered, and thus the user can enjoy a fresh talk with the robot apparatus.

Thus, the sentence output in step S2 is a sentence composed of randomly selected words. More specifically, each word is composed of randomly selected syllables. Herein, each syllable is produced by combining phonemes including one or more consonants C and a vowel V into a form, for example, CV or CCV. In the present embodiment, phonemes are prepared in advance. Parameters such as a duration and a pitch of all respective phonemes are first set to particular initial values, and the parameters are changed depending upon the detected emotional state so as to express emotion. The manner of controlling the parameters depending upon the detected emotional state to express emotion will be described in further detail later.

In the present embodiment, the content of the output sentence does not depend upon the emotional state of the emotion model or the detection result thereof. However, the sentence may be somewhat adjusted depending upon the emotional state, or a sentence may be produced or selected depending upon the emotional state.

In step S3, the parameters used in voice synthesis are controlled depending upon the emotional state discriminated in step S1. The parameters used in voice synthesis include a duration, a pitch, and an intensity of each phoneme, and these parameters are changed depending upon the detected emotional state such as calm, anger, sadness, happiness, or comfort to express corresponding emotion.

More specifically, tables representing correspondence between the emotions (calm, anger, sadness, happiness, and comfort) and parameters are prepared in advance, and a table is selected depending upon the detected emotional state. Tables prepared for the respective emotions will be described in further detail later.

In step S4, the sentence output in step S2 is sent to a voice synthesizer. The voice synthesizer synthesizes a voice in accordance with the parameter controlled in step S3. Time-series voice data obtained by the voice synthesis is then supplied to a speaker via a D/A converter and an amplifier, and a corresponding voice is uttered actually. In the robot apparatus, the above-described process is performed by a so-called virtual robot, and a resultant voice is uttered from the speaker so as to express the current emotion of the robot apparatus.

In the basic embodiment of the present invention, as described above, a voice is uttered with an emotional expression by controlling the voice synthesis parameters (duration, pitch, volume of phonemes) depending upon the emotional state related to the physical condition. Because phonemes are randomly selected, it is not necessary that words or sentences have particular meanings. Nevertheless, an uttered voice seems to be an actual speech. Furthermore, the uttered voice can be different each time it is uttered by randomly changing a part of the parameter or by randomly combining phonemes or randomly determining the length of a word or sentence. Because there are a small number of parameters to be controlled, the method can be easily implemented.

(2) Emotion and Algorithm of Synthesizing Meaningless Words

Emotion and the algorithm of synthesizing meaningless words are described in detail below. An object of the present embodiment is to realize a technique of producing a meaningless sentence which is varied each time when it is uttered so that it seems to be a realistic speech. Another object of the present embodiment is to add an emotional expression to such a sentence uttered.

To utter such a sentence, a voice synthesizer or a voice synthesis system is used. Data input to the voice synthesis system includes a list of phonemes and durations, target pitches, and times at which the pitches should reach the target pitches (the times may be represented by percentages with respect to the durations). The algorithm of the voice synthesis is briefly described below.

(2-2) Generation of Sentences to be Uttered

Generation of a meaningless sentence to be uttered can be realized by randomly combining words each of which is produced by randomly combining syllables. Herein, each syllable is composed of a combination of a consonantal phoneme C and a vowel phoneme V in the form of CV or CCV. Phonemes are prepared in the form of a list. In this list, a fixed duration and pitch are registered for each of all phonemes.

For example, a phoneme "b" is represented by a value "448 10 150 80 158" registered in the list. Herein, "448" indicates that the phoneme "b" has a duration of 448 ms. "10" and the following "150" indicate that the pitch should reach 150 Hz at a time of 10% of the total duration of 448 ms. "80" and "158" indicate that the pitch reach 158 Hz at a time of 80% of the total duration of 448 ms. All phonemes are represented in a similar manner.

Fig. 2 illustrates a syllable represented by a connection of a phoneme "b" given by "131 80 179", a phoneme "@" given by "77 20 200 80 229", and a phoneme "b" given by "405 80 169". In this example, the syllable is produced by combining phonemes which are discontinuous into a continuous form.

Phonemes of a syllable can be modified depending upon an emotional expression so that a resultant sentence is uttered with an emotional fashion. More specifically, the durations and the pitches representing the features or characteristics of the respective phonemes are changed to express emotion.

In brief, the sentence composed of phonemes is a combination of words, each of words is composed of a combination of syllables, and each of syllables is composed of a combination of phonemes. The process of creating such a sentence is descried in detail below for each step thereof.

[1] First, the number of words to be included in a sentence is determined. For example, the number of words is given by a random number within the range from 20 to MAXWWORDS. Herein, MAXWORDS is a voice synthesis parameter indicating the maximum number of words allowed to be included in one sentence.

[2] Words are then produced. More specifically, it is first determined probabilistically (by PROBAACENT) whether each word of the sentence should be accented.

Subsequently, syllables and phonemes of the syllables are determined for each word according to the following steps.

[3-1] The number of syllables is determined for each word. For example, the number of syllables is given by a random number within the range from 2 to MAXSYLL. Herein, MAXSLYY is a voice synthesis parameter indicating the maximum number of syllables allowed to be included in one word.

[3-2] In the case where a word includes an accent, one syllable is selected in a random fashion and labeled with an accent mark.

[3-3] Each syllable is determined to have either a form of CV or a form of CCV. For example, syllables having the form of CV are selected with a probability of 0.8%.

[3-4] Consonants and vowels are randomly selected from a phoneme database (or a phoneme list) and employed as C and V in the respective syllables so as to have the form of CV or CCV.

[3-5] The duration of each phoneme is determined by calculating MEANDUR + random(DURVAR). Herein, MEANDUR is a voice synthesis parameter indicating a fixed component of the duration and random(DURVAR) is a voice synthesis parameter indicating a random component of the duration given by a random number.

[3-6-1] The pitch of each phoneme is determined by calculating e = MEANPITCH + random(PITCHVAR). Herein, MEANPITCH indicates a fixed component of the pitch and random(PITCHVAR) indicates a random component of the pitch given by a random number. MEANPITCH and PITCHVAR are parameters which are determined depending upon, for example, emotion.

[3-6-2] In the case in which a given phoneme is a consonant, the pitch thereof is given by e - PITCHVAR. On the other hand, if the given phoneme is a vowel, the pitch thereof is given by e + PITCHVAR.

[3-7-1] If a given syllable has an accent, DURVAR is added to the duration.

[3-7-2] In the case where a given syllable has an accent, if DEFAULTCONTOUR = rising, the pitch of a consonant is given by MAXPITCH - PITCHVAR and the pitch of a vowel is given by MAXPITCH + PITCHVAR. On the other hand, if DEFAULTCONTOUR = falling, the pitch of a consonant is given by MAXPITCH + PITCHVAR and the pitch of a vowel is given by MAXPITCH - PITCHVAR. In the case where DEFAULTCONTOUR = stable, the pitch is given by MAXPITCH for both a consonant and a vowel. Herein, DEFAULTCONTOUR and MAXPITCH are voice synthesis parameters indicating the characters (the contour and the pitch) of a syllable.

Syllables and phonemes thereof are determined for each word via the above-described steps [3-1] to [3-7]. Finally, the contour of the word located at the end of the sentence to be uttered is adjusted as follows.

[4-1] In the case where the last word of the sentence has no accent, e is set such that e = PITCHVAR/2. If CONTOURLASTWORD = falling, -(I + 1) * e is added for each syllable such that e = e + e, wherein I indicates an index of the phonemes. If CONTOURLASTWORD = rising, +(I + 1) * e is added for each syllable such that e = e + e.

[4-2] In the case where the last word of the sentence has an accent, if CONTOURLASTWORD = falling, DURVAR is added to the duration of each syllable. Furthermore, the pitch of a consonant is given by MAXPITCH + P1TCHVAR and the pitch of a vowel is given by MAXPITCH - P1TCHVAR. On the other hand, if CONTOURLASTWORD = rising, DURVAR is added to the duration of each syllable, and, furthermore, the pitch of a consonant is given by MAXPITCH - P1TCHVAR while the pitch of a vowel is given by MAXPITCH + P1TCHVAR.

[5] Finally, a sound volume of the sentence is determined and set to VOLUME. Herein VOLUME is one of voice synthesis parameters.

Thus, a sentence to be uttered is generated via the process including the above-described steps. Herein, because some parameters used in generation of a sentence to be uttered are determined using random numbers, a meaningless sentence is generated and it becomes different each time it is generated. Furthermore, various parameters are changed depending upon the emotion so that the sentence is uttered with an emotional expression.

A program code (source code) used to perform the above-described process with hardware is shown in Figs. 3 and 4, wherein Fig. 3 illustrates a first half of the program and Fig. 4 illustrates the remaining part of the program.

(2-2) Parameters Given Depending upon the Emotional State

An emotional expression can be added to a sentence by controlling the parameters used in the above-described algorithm of generating the sentence. Emotion expressed in utterance of a sentence may include, for example, calm, anger, sadness, happiness, and comfort. Note that emotion to be expressed is not limited to those listed above.

For example, emotion can be represented in a feature space consisting of an arousal component and a valence component. For example, anger, sadness, happiness, and comfort are represented in particular regions in the arousal-valence feature space as shown in Fig. 5, and calm is represented in a region at the center of the feature space. For example, anger is positive in arousal component, while sadness is negative in arousal component.

Tables representing a set of parameters (including at least the duration (DUR), the pitch (PITCH), and the sound (VOLUME) of phoneme) defined in advance for each of emotion, anger, sadness, happiness, etc., are shown below.

TABLE 1

| Calm | |
|---|---|
| Parameter | State or Value |
| LASTWORDACCENTED | no |
| MEANPITCH | 280 |
| PITCHVAR | 10 |
| MAXPITCH | 370 |
| MEANDUR | 200 |
| DURVAR | 100 |
| PROBACCENT | 0.4 |
| DEFAULTCONTOUR | rising |
| CONTOURLASTWORD | rising |
| VOLUME | 1 |

TABLE 2

| Anger | |
|---|---|
| Parameter | State or Value |
| LASTWORDACCENTED | no |
| MEANPITCH | 450 |
| PITCHVAR | 100 |
| MAXPITCH | 500 |
| MEANDUR | 150 |
| DURVAR | 20 |
| PROBACCENT | 0.4 |
| DEFAULTCONTOUR | falling |
| CONTOURLASTWORD | falling |
| VOLUME | 2 |

TABLE 3

| Sadness | |
|---|---|
| Parameter | State or Value |
| LASTWORDACCENTED | nil |
| MEANPITCH | 270 |
| PITCHVAR | 30 |
| MAXPITCH | 250 |
| MEANDUR | 300 |
| DURVAR | 100 |
| PROBACCENT | 0 |
| DEFAULTCONTOUR | falling |
| CONTOURLASTWORD | falling |
| VOLUME | 1 |

TABLE 4

| Comfort | |
|---|---|
| Parameter | State or Value |
| LASTWORDACCENTED | t |
| MEANPITCH | 300 |
| PITCHVAR | 50 |
| MAXPITCH | 350 |
| MEANDUR | 300 |
| DURVAR | 150 |
| PROBACCENT | 0.2 |
| DEFAULTCONTOUR | rising |

TABLE 4 (continued)

| Comfort | |
|---|---|
| Parameter | State or Value |
| CONTOURLASTWORD | rising |
| VOLUME | 1 |

TABLE 5

| happiness | |
|---|---|
| Parameter | State or Value |
| LASTWORDACCENTED | t |
| MEANPITCH | 400 |
| PITCHVAR | 100 |
| MAXPITCH | 600 |
| MEANDUR | 170 |
| DURVAR | 50 |
| PROBACCENT | 0.3 |
| DEFAULTCONTOUR | rising |
| CONTOURLASTWORD | rising |
| VOLUME | 2 |

The table representing the parameters used in voice synthesis is switched depending upon the discriminated emotion so as to express emotion.

Thus, voice synthesis is performed using parameters defined in a table selected depending upon the emotion thereby uttering a sentence with an emotional expression. When a human user of the robot apparatus hears a meaningless but emotionally expressive sentence generated in the above-described manner, the human user can recognize the emotion of the robot apparatus although the human user cannot understand the content of the uttered sentence. Because the sentence becomes different each time it is uttered, the human user can enjoy a fresh talk uttered by the robot apparatus. Now, an embodiment of a robot apparatus according to the present invention will be described below, and then a specific example of implementation of the utterance algorithm upon the robot apparatus will be descried.

Although in the embodiment described below, the parameters are controlled by selecting a table representing parameters from a plurality of tables prepared in advance depending upon emotion, the manner of controlling the parameters depending upon emotion is not limited to that shown in the embodiment.

(3) An Example of a Robot Apparatus According to an Embodiment

(3-1) Configuration of the Robot Apparatus

A specific embodiment of the present invention is described herein below in reference with the drawings. In this specific embodiment, the present invention is applied to an autonomous type pet robot having four legs. This pet robot apparatus has software describing an emotion/instinct model whereby the pet robot apparatus can behave in a manner similar to an actual living pet. Although in the present embodiment, the invention is applied to a robot capable of moving, utterance of a meaningless sentence according to the present invention may be easily realized in a computer system including a speaker, whereby an effective human-machine interaction (dialog) can be achieved. Therefore, the application of the present invention is not limited to the robot system.

In this specific embodiment, the robot apparatus is a pet robot having a shape simulating a dog as shown in Fig. 6. The robot apparatus includes a body unit 2, leg units 3A, 3B, 3C, and 3D connected to the body unit 2, at respective four corners of the body unit 2, a head unit 4 connected to the front end of the body unit 2, and a tail unit 5 connected to the rear end of the body unit 2.

In the body unit 2, there is provided a control unit 16 including, as shown in Fig. 7, a CPU (Central Processing unit) 10, a DRAM (Dynamic Random Access Memory) 11, a flash ROM (Read Only Memory) 12, a PC (personal Computer) card interface circuit 13, and a signal processor 14, wherein these components are connected to one another via an internal bus 15. In the body unit 2, there are also provided a battery 17 serving as a power source of the robot apparatus 1 and an angular velocity sensor 18 and an acceleration sensor 19 for detecting the orientation and the acceleration of motion of the robot apparatus 1.

On the head unit 4, there are disposed a CCD (Charge Coupled Device) camera 20 for capturing an image of an external environment, a touch sensor 21 for detecting a physical pressure which is applied by a human user when the user rubs or pats the pet robot, a distance sensor 22 for measuring a distance to an object from the pet robot, a microphone 23 for detecting an external sound, speaker 24 for outputting a voice such as a barking, growling, or yelping voice, and LED (Light Emitting Diodes, not shown) serving as eyes of the robot apparatus 1, wherein these components are disposed at properly selected locations on the head unit 4.

Actuators $25_l$ to $25_n$ and potentiometers $26_1$ to $26_n$ are disposed in joints of the respective leg units 3A to 3D, in joints between the body unit 2 and the respective leg units 3A to 3D, in joints between the head unit 4 and the body unit 2, and a joint of a tail 5A in a tail unit 5, wherein there are as many sets of actuators and potentiometers as the total degree of freedom. The actuators $25_l$ to $25_n$ may be realized by, for example, servomotors. The leg units 3A to 3D are controlled by the servomotors so that the robot moves in a desired manner or into a desired posture.

The sensors such as the angular velocity sensor 18, the acceleration sensor 19, the touch sensor 21, the distance sensor 22, the microphone 23, the speaker 24, and the potentiometers $26_l$ to $26_n$, the LEDs, and the actuators $25_l$ to $25_n$ are connected to the signal processor 14 of the control unit 16 via corresponding hubs $27_l$ to $27_n$. The CCD camera 20 and the battery 17 are directly connected to the signal processor 14.

The signal processor 14 sequentially acquires sensor data, image data, and voice data from the respective sensors and stores the acquired data into the DRAM 11 at predetermined addresses. The signal processor 14 also acquires battery data indicating the remaining battery life from the battery 17 and stores it into the DRAM 11 at a predetermined address.

The sensor data, the image data, the voice data, and the battery data stored in the DRAM 11 are used by the CPU 10 to control the operation of the robot apparatus 1.

In practice, when electric power of the robot apparatus 1 is turned on, the CPU 10 first reads a control program from the memory card 28 or the flash ROM 12 inserted in a PC card slot (not shown) of the body unit 2, via a PC card interface circuit 13 or directly, and stores it into the DRAM 11.

Thereafter, on the basis of the sensor data, the image data, the voice data, and the battery data acquired and stored in the DRAM 11 by the signal processor 14 in the above-described manner, the CPU 10 detects the state of the robot apparatus 1 itself and the state of the environment and also determines whether a command is given by the user or whether any action is applied to the robot apparatus 1 by the user.

On the basis of the result of determination, the CPU 10 further determines what to do next in accordance with the control program stored in the DRAM 11 and drives particular actuators of those $25_l$ to $25_n$ depending upon the determination so as to swing the head unit 4 up and down or to the right and left, move the tail 5A of the tail unit 5, or walk by driving the leg units 3A to 3D.

The CPU 10 also generates voice data as required and supplies it as a voice signal to the speaker 24 via the signal processor 14 thereby outputting a voice to the outside in accordance with the voice signal. The CPU 10 also controls the turning-on/off of the LEDs.

Thus, the robot apparatus 1 is capable of autonomously behaving depending upon the states of the robot apparatus 1 itself and of the environment and in response to a command given by the user or an action of the user.

(3-2) Software Configuration of the Control Program

Fig. 8 illustrates a software configuration of the control program of the robot apparatus 1. In Fig. 8, a device driver layer 30, in which there is a device driver set 31 including a plurality of device drivers, is located in the lowest layer of the control program. The device drivers are objects which are allowed to directly access the CCD camera 20 (Fig. 7) and other hardware devices, such as a timer, similar to those widely used in computer systems. In response to an interrupt from a hardware device, a corresponding device driver performs an operation.

In the lowest layer of the device driver layer 30, there is a robotic server object 32 including a virtual robot 33, a power manager 34, a device driver manager 35, and a designed robot 36, wherein the virtual robot 33 includes a set of software for providing interfaces for access to hardware devices such as the above-described sensors and actuators $25_l$ to $25_n$, the power manager 34 includes a set of software for management of the electric power such as switching thereof, the device driver manager 35 includes a set of software for managing various device drivers, and the designed robot 36 includes a set of software for managing the mechanism of the robot apparatus 1.

A manager object 37 includes an object manager 38 and a service manager 39. The object manager 38 includes a set of software for managing the starting and ending operations of various sets of software included in the robotic server object 32, a middleware layer 40, and an application layer 41. The service manager 39 includes a set of software for managing connections of the respective objects in accordance with information about connections among various objects wherein the connection information is described in a connection file stored in the memory card 28 (Fig. 7).

The middleware layer 40 is located in a layer higher than the robotic server object 32 and includes a set of software for providing basic functions of the robot apparatus 1, such as functions associated with the image processing and voice processing. The application layer 41 is located in a layer higher than the middleware layer 40 and includes a set of software for determining the action of the robot apparatus 1 in accordance with the result of the processing performed by the set of software in the middleware layer 40.

Fig. 9 illustrates specific examples of software configurations of the middleware layer 40 and the application layer 41.

As shown in Fig. 9, the middleware layer 40 includes a detection system 60 and an output system 69, wherein the detection system 60 includes an input semantics converter module 59 and various signal processing modules 50 to 58 for detection of noise, temperature, brightness, scale, distance, posture, touching pressure, motion, and colors, and the output system 69 includes an output semantics converter module 68 and various signal processing modules 61 to 67 for controlling the posture, tracking operation, motion reproduction, walking operation, recovery from overturn, turning-on/off of LEDs, and voice reproduction.

The respective signal processing modules 50 to 58 in the detection system 60 acquire corresponding data such as sensor data, image data, and voice data read by the virtual robot 33 of the robotic server object 32 from the DRAM 11 (Fig. 7) and process the acquired data. Results of the processing are applied to the input semantics converter module 59. The virtual robot 33 is capable of transmitting, receiving, and converting signals in accordance with a predetermined communication protocol.

On the basis of the processing results received from the respective signal processing modules 50 to 58, the input semantics converter module 59 detects the states of the robot apparatus 1 itself and of the environment and also detects a command given by the user or an action of the user applied thereto. More specifically, the input semantics converter module 59 detects an environmental state such as a noisy state, a hot state, or a light state. It also detects, for example, that there is a ball or that the robot apparatus 1 has overturned, or has been rubbed or tapped. Other examples of environmental states are "a scale of do mi so is heard", "a moving object has been detected", and "an obstacle has been detected". Such an environmental state, a command issued by the user, and an action applied by the user to the robot apparatus 1 are detected and the detection result is output to the application layer 41 (Fig. 8).

As shown in Fig. 10, the application layer 41 includes five modules: an action model library 70, an action switching module 71, a learning module 72, an emotion model 73, and an instinct model 74. The emotion model 73 is a model according to which the emotional state is changed in response to a stimulus applied from the outside. Depending upon the emotion determined by the emotion model 73, an emotional expression is superimposed upon an uttered sentence as described earlier. The states of the emotion model 73 and the instinct model 74 are monitored and discriminated by control means such as the CPU 10.

As shown in Fig. 11, the action model library 70 includes independent action models $70_l$ to $70_n$ one of which is selected in response to detection of a particular event such as "detection of a reduction in the remaining battery life to a low level", "detection of necessity of recovery from turnover", "detection of an obstacle to avoid", "detection of necessity of expressing emotion", and "detection of a ball".

When a detection result is given by the input semantics converter module 69 or when a predetermined time has elapsed since the last reception of a detection result, the action models $70_l$ to $70_n$ check, as required, the corresponding parameter values of emotion stored in the emotion model 73 or the corresponding parameter values of desire stored in the instinct model 74 and determine what to do next, as will be described later. The determination result is output to the action switching module 71.

In the present embodiment, the action models $70_l$ to $70_n$ probabilistically determine what to do next in accordance with an algorithm called probabilistic finite automaton in which, as shown in Fig. 12, transition probabilities $P_l$ to $P_n$ are defined for respective transitions denoted by arcs $ARC_l$ to $ARC_n$ among nodes $NODE_0$ to $NODE_n$.

More specifically, each of the action models $70_l$ to $70_n$ has its own state transition table 80, such as that shown in Fig. 13, for each of nodes $NODE_0$ to $NODE_n$ included in the action model.

In the state transition table 80, input events (detection results) which can cause a transition from a particular one of nodes $NODE_0$ to $NODE_n$ are described in a column of "input event name" in the order of priority. Further detailed conditions which can cause a transition for each input event are described in a column of "data name" and a column of "data range".

For example, as for $NODE_{100}$ in the transition table 80 shown in Fig. 13, in the case where a detection result (BALL) indicating that "a ball has been detected" is given, a necessary condition for a transition to another node is that the size (SIZE) of the ball be within the range from "0 to 1000". In the case where a detection result (OBSTACLE) indicating that an obstacle has been detected is given, a necessary condition for a transition to another node is that the distance (DISTANCE) to the obstacle be within the range from "0 to 100".

Furthermore, in the case of this node $NODE_{100}$, even when no detection result is input, a transition to another node can occur if the value of one of parameters associated with "JOY", "SURPRISE", and "SADNESS", which are parts of parameters associated with emotion and instinct described in the emotion model 73 and the instinct model and which are periodically checked by the action models $70_1$ to $70_n$, is within the range from 50 to 100.

In the state transition table 80, names of nodes to which a transition from a node of interest ($NODE_0$ to $NODE_n$) is allowed are described in a row of "destination node", and a probability of a transition which is allowed when all conditions described in rows of "input event name", "data value", and "data range" are satisfied is described in a corresponding field in a row of a corresponding destination node. An action, which is to be output when a transition to a particular destination node ($NODE_0$ to $NODE_n$) occurs, is described at an intersection of a row of "output action" and the column of the corresponding destination node. Note that the sum of transition probabilities for each row is equal to 100%.

Thus, in the case of $NODE_{100}$ in the state transition table 80 shown in Table 13, if an input detection result indicates that a ball has been detected (BALL) and also indicates that the size (SIZE) of the ball is within the range from 0 to 1000, a transition to $NODE_{120}$ (node

120) can occur with a probability of 30%, and ACTION 1 is outputted as an action performed when the transition actually occurs.

Each of the action models $70_l$ to $70_n$ is formed of a plurality of nodes $NODE_0$ to $NODE_n$ connected to each other wherein each node is described in the form of a state transition table 80 similar to that described above. When, for example, a detection result is given by the input semantics converter module 59, each of the action models $70_l$ to $70_n$ probabilistically determines what to do next in accordance with the state transition probabilities assigned to a corresponding node of $NODE_0$ to $NODE_n$ and outputs a determination result to the action switching module 71.

The action switching module 71 shown in Fig. 10 selects an action having higher priority assigned in advance thereto from the actions output from the action models $70_l$ to $70_n$ of the action model library 70 and sends a command indicating the selected action should be performed (hereinafter, such a command will be referred to as an action command) to the output semantics converter module 68 in the middleware layer 40. In the present embodiment, of the action models $70_l$ to $70_n$ shown in Fig. 11, actions models at lower positions have higher priority.

In response to action completion information which is outputted from the output semantics converter module 68 when an action is completed, the action switching module 71 informs the learning module 72, the emotion model, and the instinct model 74 of the completion of the action.

Of various detection results given by the input semantics converter module 59, a detection result indicating an action such as tapping or rubbing performed by a user for the purpose of teaching is input to the learning module 72.

In accordance with the detection result and notification from the action switching module 71, the learning module 72 modifies a corresponding state transition probability of the corresponding action model $70_l$ to $70_n$ in the action model library 70. More specifically, if the robot apparatus 1 was tapped (scolded) during a particular action, the learning module 72 reduces the occurrence probability of that action. On the other hand, if the robot apparatus 1 is rubbed (praised) during a particular action, the learning module 72 increases the occurrence probability of that action.

In the emotion model 73, there are stored parameters indicating the intensities of the respective six emotions: "joy", "sadness", "anger", "surprise", "disgust", and "fear". The emotion model 73 periodically updates the parameter values associated with these emotions in accordance with detection results of particular events such as tapping or rubbing given by the input semantics converter module 59, elapsed time, and notifications from the action switching module 71.

More specifically, the emotion model 73 updates the parameter values as follows. In accordance with a detection result given by the input semantics converter module 59, an action being performed by the robot apparatus 1 at that time, and an elapsed time since the last updating of a parameter value, a parameter value E[t + 1] for use in the next period is calculated in accordance with equation (1) described below:

$$E[t+1] = E[t] + ke \times \Delta E[t] \quad (1)$$

where E[t] is a current parameter value of the emotion of interest, ΔE[t] is a variation in emotion calculated in accordance with a predetermined equation, and ke is a factor representing the sensitivity of that emotion.

The current parameter value E[t] is replaced with the calculated value E[t + 1]. The emotion model 73 updates all parameter values of emotions in a similar manner.

The variation ΔE[t] in the parameter value, that is, the degree to which the parameter value of each emotion is varied in response to the respective detection results and notifications from the output semantics converter module 68 is predetermined. For example, detection of a fact that the robot apparatus 1 greatly affects the variation ΔE[t] in the parameter value of "anger". On the other hand, detection of a fact that the robot apparatus 1 has been rubbed greatly affects the variation ΔE [t] in the parameter value of "joy".

Herein, the notification from the output semantics converter module 68 refers to feedback information associated with an action (action completion information) and is output as a result of an occurrence of an action. For example, if an action of "barking" is performed, the emotion level of anger can decrease. Notifications from the output semantics converter module 68 are also inputted to the learning module 72 described above. In response to reception of a notification, the learning module 72 changes a corresponding transition probability of a corresponding one of the action models $70_l$ to $70_n$.

Feeding-back of an action result may be performed in response to an output of the action switching module 71 (that is, in response to an emotional action).

In the instinct model 74, there are stored parameter values representing the intensities of four independent instinctive desires for "exercise", "affection", "appetite", and "curiosity" The instinct model 74 periodically updates the parameter values associated with these desires in accordance with detection results given by the input semantics converter module 59, elapsed times, and notifications from the action switching module 71.

More specifically, the instinct model 74 updates the parameter values associated with "exercise", "affection", and "curiosity" as follows. In accordance with a detection result, an elapsed time, and a notification from the output semantics converter module 68, a parameter value I[k + 1] associated with a particular desire is calculated using equation (2) shown below:

$$I[k + 1] = I[k] + ki \times \Delta I[k] \qquad (2)$$

where I[k] is a current parameter value of a desire of interest, $\Delta I[k]$ is a variation in the parameter value of that desire which is calculated in accordance with a predetermined equation, and ki is a factor representing the sensitivity of that desire. The current parameter value I [k] is replaced with the calculated value E[k + 1]. The emotion model 74 updates parameter values of instinctive desires other than "appetite" in a similar manner.

The variation $\Delta I[k]$ in the parameter value, that is, the degree to which the parameter value of each desire is varied in response to the respective detection results and notifications from the output semantics converter module 68 is predetermined. For example, a notification from the output semantics converter module 68 greatly affects the variation $\Delta I[k]$ in the parameter value of "tiredness".

In the present embodiment, each of the parameter values associated with emotions and instinctive desires is limited within the range from 0 to 100, and the factors ke and ki are set for each emotion and desire.

When the output semantics converter module 68 in the middleware layer 40 receives, from the action switching module 71 in the application layer 41, an abstract action command such as "Go Forward", "Be Pleased", "Cry", or "Track (Follow a Ball)", the output semantics converter module 68 transfers, as shown in Fig. 9, the received action command to a corresponding signal processing module (61 to 67) in the output system 69.

A signal processing module, which has received an action command, generates a servo control value to be applied to a corresponding actuator $25_l$ to $25_n$ (Fig. 7) to execute a specified action, voice data to be output from the speaker 24 (Fig. 7), and/or driving data to be applied to LEDs serving as eyes, in accordance with the received action command. The generated data is sent to the corresponding actuator $25_l$ to $25_n$, the speaker 24, or the LEDs, via the virtual robot 33 of the robotic server object 32 and the signal processor 14 (Fig. 7).

As described above, the robot apparatus 1 autonomously acts in accordance with the control program, depending upon the internal and external states and in response to a command or action issued or performed by the user.

(3-3) Implementation of the Utterance Algorithm on the Robot Apparatus

The construction of the robot apparatus 1 has been described above. The utterance algorithm described above is implemented in the voice reproduction module 67 shown in Fig. 9.

When the voice module 67 receives a voice output command (for example, a command to utter with a joyful expression) from an upper-level part (for example, the action model), the voice module 67 generates a voice time-series data and transmits it to the speaker device of the virtual robot 33 so that the robot apparatus 1 utters a sentence composed of meaningless words with an emotional expression from the speaker 24 shown in Fig. 7.

An action model for generating an utterance command depending upon the emotion is described below (hereinafter, such an action model will be referred to as an utterance action model). The utterance action model is provided as one of action models in the action model library 70 shown in Fig. 10.

The utterance action model acquires the current parameter values from the emotion model 73 and the instinct model 74 and determines a content of a sentence to be uttered using a state transition table 80 such as that shown in Fig. 13 in accordance with the acquired parameter values. That is, a sentence to be uttered is generated in accordance with an emotion value which can cause a state transition, and the generated sentence is uttered when the state transition occurs.

Fig. 14 illustrates an example of a state transition table used by the utterance action model. Although the state transition table shown in Fig. 14 for use by the utterance action model is different in format from the state transition table 80 shown in Fig. 13, there is no essential difference. The state transition table shown in Fig. 14 is described in further detail below.

In this specific example, the state transition table describes conditions associated with a time-out (TIMEOUT) and emotions of happiness (HAPPY), sadness (SAD), and anger (ANGER), which can cause a transition from node XXX to another node. More specifically, parameter values associated with happiness, sadness, anger, and time-out which can cause a transition are specified as HAPP 70, SAD 70, ANGER 70, and TIMEOUT = timeout. 1. Herein, timeout. 1 denotes a particular value of time.

Furthermore, the state transition table defines nodes to which a transition from node XXX is allowed. In this specific example, they are node YYY, node ZZZ, node WWW, and node VVV. An action which is to be performed when a transition occurs is assigned to each destination node. More specifically, "BANZAI (cheer)", "OTIKOMU (be depressed)", "BURUBURU (tremble)", and "(AKUBI) (yawn)" are assigned to the respective nodes.

Furthermore, it is specified that when the action of "BANZAI (cheer)" is performed, a sentence should be uttered with a joyful expression (talk_happy), and a motion of raising forelegs (motion_banzai) and a motion of swinging the tail (motion_swingtail) should be performed. Herein, a sentence with a joyful expression is uttered in accordance with the parameter value associated with the emotion of joy which is prepared in the above-described manner. That is, a sentence is uttered in a joyful fashion in accordance with the utterance algorithm described above.

In the case of the action of "OTIKOMU (be depressed)", a sentence is uttered in a sad fashion (talk_sad), and a timid motion (motion_ijiiji) is performed. Herein, a sentence with a sad expression is uttered in accordance with the parameter value associated with the emotion of sadness which is prepared in the above-described manner. That is, a sentence is uttered in a sad fashion in accordance with the utterance algorithm described above.

In the case of the action of "BURUBURU (tremble)", a sentence is uttered in an angry fashion (talk_anger), and a trembling motion (motion_buruburu) is performed to express anger. Herein, a sentence with an angry expression is uttered in accordance with the parameter value associated with the emotion of anger which is prepared in the above-described manner. That is, a sentence is uttered in an angry fashion in accordance with the utterance algorithm described above.

On the other hand, state transition table defines a motion corresponding to the action of "(AKUBI) (yawn)" such that a yawn (motion_akubi) should be made to express a bore.

Furthermore, the state transition table defines actions to be executed in the respective destination nodes, and transition probabilities to the respective destination nodes are defined in the probability table. That is, when a transition condition is met, a transition to a certain node is determined in accordance with a probability defined in the probability table.

In the example shown in Fig. 14, when the condition associated with happiness (HAPPY) is met, that is, when the value of HAPPY is greater than a threshold value of 70, the action of "BANZAI (cheer)" is selected with a probability of 100%. In the case where the condition associated with sadness (SAD) is met, that is, when the value of SAD is greater than a threshold value of 70, the action of "OTIKOMU (be depressed)" is selected with a probability of 100%. In the case where the condition associated with anger (ANGER) is met, that is, when the value of ANGER is greater than a threshold value of 70, the action of "BURUBUTU (tremble)" is selected with a probability of 100%. In the case where the condition associated with time-out (TIMEOUT) is met, that is, when the value of TIMEOUT has reached a threshold value of timeout. 1, the action of "(AKUBI) (yawn)" is selected with a probability of 100%. Although in this specific example, an action is selected with a probability of 100%, that is, an action is always executed when a condition is met, the probability is not limited to 100%. For example, the probability of the action of "BANZAI (cheer)" for the happy state may be set to 70%.

By defining state transitions associated with the utterance action mode in the state transition table, it becomes possible to control the utterance depending upon the emotional state of the robot apparatus in response to inputs to sensors.

In the embodiments described above, the parameters associated with the duration, the pitch, and the volume are controlled in accordance with the emotional state. However, the parameters are not limited to those, and other sentence factors may be controlled in accordance with the emotional state.

Furthermore, although in the embodiments described above, the emotion model of the robot apparatus includes, by way of example, emotions of happiness, anger, etc, the emotions dealt with by the emotion model are not limited to those examples and other emotional factors may be incorporated. In this case, the parameters of a sentence may be controlled in accordance with such a factor.

As can be understood from the above description, the present invention provides great advantages. That is, the voice synthesis method according to the present invention comprises the steps of: discriminating emotional state of the emotion model of the apparatus having a capability of uttering; outputting a sentence representing a content to be uttered in the form of a voice; controlling a parameter for use in voice synthesis, depending upon the emotional state discriminated in the emotional state discrimination step; and inputting, to a voice synthesis unit, the sentence output in the sentence output step and synthesizing a voice in accordance with the controlled parameter, whereby a sentence to be uttered by the apparatus having the capability of uttering is generated in accordance with the voice synthesis parameter which is controlled depending upon the emotional state of the emotion model of the apparatus having the capability of uttering.

According to another aspect of the present invention, there is provided a voice synthesis apparatus comprising: emotional state discrimination means for discriminating an emotional state of an emotion model of an apparatus having a capability of uttering; sentence output means for outputting a sentence representing a content to be uttered in the form of a voice; parameter control means for controlling a parameter used in voice synthesis depending upon the emotional state discriminated by the emotional state discrimination means; and voice synthesis means which receives the sentence output from the sentence output means and synthesizes a voice in accordance with the controlled parameter, whereby the parameter used in voice synthesis is controlled by the parameter control means depending upon the emotional state discriminated by the emotional state discrimination means for discriminating the emotional state of the emotion model of the apparatus having the capability of uttering, and the voice synthesis means synthesizes a voice corresponding to the sentence supplied from the sentence output means in accordance with the controlled parameter. Thus, the voice synthesis apparatus can generate a sentence uttered by the apparatus having the capability of uttering in accordance with the voice synthesis parameter controlled in accordance with the emotional state of the emotion model of the apparatus having the capability of uttering.

According to still another aspect of the present invention, there is provided a robot apparatus comprising: an emotion model which causes an action of the robot apparatus; emotional state discrimination means for discriminating an emotional state of an emotion model; sentence output means for outputting a sentence representing a content to be uttered in the form of a voice; parameter control means for controlling a parameter used in voice synthesis depending upon the emotional state discriminated by the emotional state discrimination means; and voice synthesis means which receives the sentence output from the sentence output means and synthesizes a voice in accordance with the controlled parameter, whereby the parameter used in voice synthesis is controlled by the parameter control means depending upon the emotional state discriminated by the emotional state discrimination means for discriminating the emotional state of the emotion model of the apparatus having the capability of uttering, and the voice synthesis means synthesizes a voice corresponding to the sentence supplied from the sentence output means in accordance with the controlled parameter. Thus, the robot apparatus can generate a sentence uttered by the apparatus having the capability of uttering in accordance with the voice synthesis parameter controlled in accordance with the emotional state of the emotion model of the apparatus having the capability of uttering.

## Claims

1. A voice synthesis method for synthesizing a voice in accordance with information from an apparatus (1) having a capability of uttering having at least an emotion model (73), comprising:

   an emotional state discrimination step (S1) for discriminating an emotional state of said emotion model (73) of said apparatus (1) having a capability of uttering;
   a sentence output step (S2) for outputting a sentence representing a content to be uttered in the form of a voice;
   a parameter control step (S3) for controlling a parameter for use in voice synthesis, depending upon the emotional state discriminated in said emotional state discrimination step (S1); and
   a voice synthesis step (S4) for inputting, to a voice synthesis unit, the sentence output in said sentence output step (S2) and synthesizing a voice in accordance with said controlled parameter.

2. A voice synthesis method according to claim 1, wherein said sentence has a meaningless content.

3. A voice synthesis method according to claim 1 or 2, wherein when the emotional state of said emotion model (73) becomes greater than a predetermined value, said sentence output step (S2) outputs the sentence and supplies said output sentence to said voice synthesis unit.

4. A voice synthesis method according to any one of claims 1 to 3, wherein said sentence output step (S2) outputs a sentence obtained at random for each utterance and supplies said output sentence to said voice synthesis unit.

5. A voice synthesis method according to any one of claims 1 to 4, wherein said sentence includes a plurality of phonemes and wherein said parameter includes a pitch, a duration, and an intensity of a phoneme.

6. A voice synthesis method according to any one of claims 1 to 5, wherein said apparatus (1) having a capability of uttering is an autonomous type robot apparatus which acts in response to supplied input information, and said emotion model (73) is an emotion model (73) which causes said action, and wherein said voice synthesis method further includes the step of changing the state of said emotion model (73) in accordance with said input information thereby determining said action.

7. A voice synthesis apparatus for synthesizing a voice in accordance with information from an apparatus (1) having a capability of uttering having at least an emotion model (73), comprising:

   emotional state discrimination means for discriminating the emotional state of the emotion model (73) of said apparatus (1) having a capability of uttering;
   sentence output means for outputting a sentence representing a content to be uttered in the form of a voice;
   parameter control means for controlling a parameter used in voice synthesis depending upon the emotional state discriminated by said emotional state discrimination means; and
   voice synthesis means which receives the sentence output from said sentence output means and synthesizes a voice in accordance with said controlled parameter.

8. A voice synthesis apparatus according to claim 7, wherein said sentence has a meaningless content.

9. A voice synthesis apparatus according to claim 7 or 8, wherein when the emotional state of said emotion model (73) becomes greater than a predetermined value, said sentence output means outputs said sentence to supply it to said voice synthesis means.

**10.** A voice synthesis apparatus according to any one of claims 7 to 9, wherein said sentence output means obtains a sentence at random for each utterance and outputs said sentence to supply it to said voice synthesis means.

**11.** A voice synthesis apparatus according to any one of claims 7 to 10, wherein said sentence includes a plurality of phonemes and wherein said parameter includes a pitch, a duration, and an intensity of a phoneme.

**12.** A voice synthesis apparatus according to any one of claims 7 to 11, wherein said apparatus (1) having a capability of uttering is an autonomous type robot apparatus which acts in response to supplied input information, and said emotion model (73) is an emotion model (73) which causes said action, and wherein said voice synthesis apparatus further includes emotion model changing means for changing the state of said emotion model (73) in accordance with said input information thereby determining said action.

**13.** An autonomous type which acts in accordance with supplied input information, comprising:

an emotion model (73) which causes said action,
emotional state discrimination means for discriminating the emotional state of said emotion model (73);
sentence output means for outputting a sentence representing a content to be uttered in the form of a voice;
parameter control means for controlling a parameter used in voice synthesis depending upon the emotional state discriminated by said emotional state discrimination means; and
voice synthesis means which receives the sentence output from said sentence output means and synthesizes a voice in accordance with said controlled parameter.

**14.** An autonomous type according to claim 13, wherein said autonomous type comprises a robot apparatus.

**15.** A robot apparatus according to claim 14, wherein said sentence has a meaningless content.

**16.** A robot apparatus according to claim 14 or 15, wherein when the emotional state of said emotion model (73) becomes greater than a predetermined value, said sentence output means outputs said sentence to supply it to said voice synthesis means.

**17.** A robot apparatus according to any one of claims 14 to 16, wherein said sentence output means obtains a sentence at random for each utterance and outputs said sentence to supply it to said voice synthesis means.

**18.** A robot apparatus according to any one of claims 14 to 17, wherein said sentence includes a plurality of phonemes and wherein said parameter includes a pitch, a duration, and an intensity of a phoneme.

**19.** A robot apparatus according to any one of claims 14 to 18, wherein said voice synthesis apparatus further includes emotion model changing means for changing the state of said emotion model (73) in accordance with said input information thereby determining said action.

FIG. 1

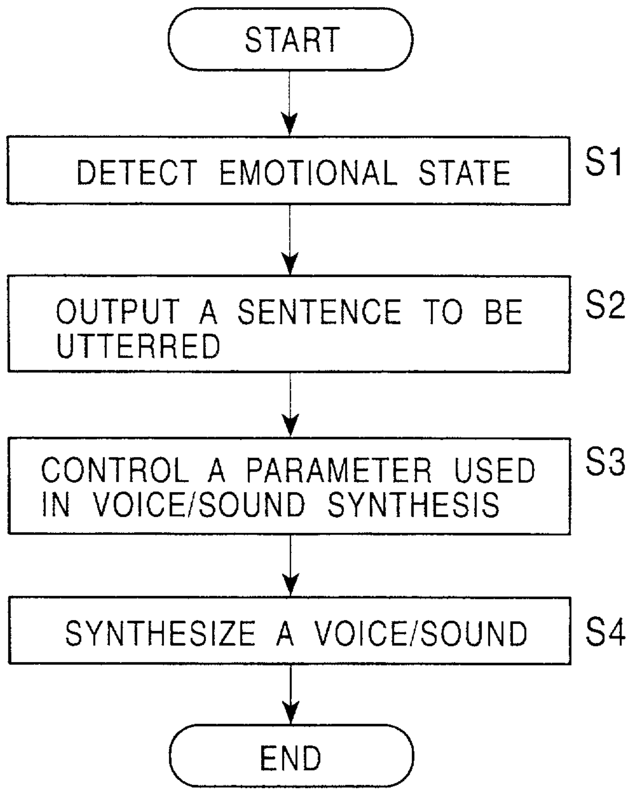
START
DETECT EMOTIONAL STATE
S1
OUTPUT A SENTENCE TO BE UTTERRED
S2
CONTROL A PARAMETER USED IN VOICE/SOUND SYNTHESIS
S3
SYNTHESIZE A VOICE/SOUND
S4
END

FIG. 2

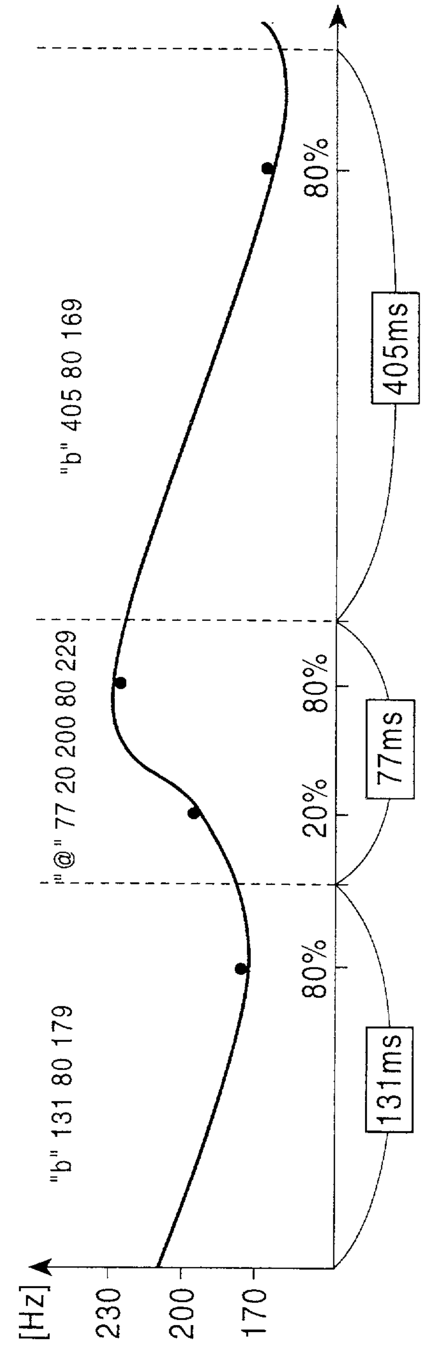
[Hz]
230
200
170
"b" 131 80 179
"@" 77 20 200 80 229
"b" 405 80 169
80%
20%
80%
80%
131ms
77ms
405ms

# FIG. 3

```
Choose the number of words of the sentence (random number between 2 and MAXWORDS) ;
Create the words :
 For each word, choose the number of syllables
             (random number between 2 and MAXSYLL), and
             decides with probability PROBACCENT whether the word is accented or not ;
If the word is accented then choose randomly one
           of its syllables and mark it as accented ;
Create the syllables ;
  For each syllable
    choose whether this is a CV or a CCV syllable
                    (CV syllable have probability 0.8) ;
    instantiate the C's and V by picking randomly a
                  consonnant or vowel in the phoneme database ;
    set the duration of each phoneme to MEANDUR + random (DURVAR) ;
    let e = MEANPITCH + random(PITCHVAR)
      set the pitch of consonnants to e - PITCHVAR
      set the pitch of vowels to e + PITCHVAR
    if the syllable is accented then
      add DURVAR to the duration of its phonemes ;
      if DEFAULTCONTOUR = rising
         set the pitch of consonants to MAXPITCH - PITCHVAR
         set the pitch of the vowel to MAXPITCH + PITCHVAR
      if DEFAULTCONTOUR = falling
         set the pitch of consonants to MAXPITCH + PITCHVAR
         set the pitch of the vowel to MAXPITCH - PITCHVAR
      if DEFAULTCONTOUR = stable
         set the pitch of phonemes to MAXPITCH
```

# FIG. 4

```
Change the contour of the last word :
if not LASTWORDACCENTED
   let e = PITCHVAR/2
       if CONTOURLASTWORD = FALLING
       for each syllable in word
         add - (i+1) *e pitch of phonemes to their value
                             (i = index of phoneme in syllable)
         e = e + e
       if CONTOURLASTWORD = RISING
       for each syllable in word
         add + (i+1)*e pitch of phonemes to their value
                        (i = index of phoneme in syllable)
         e = e + e
 else
   if CONTOURLASTWORD = FALLING
   for each syllable in word
          add DURVAR to the duration of its phonemes ;
          set the pitch of consonants to MXPITCH + PITCHVAR
          set the pitch of the vowel to MAXPITCH - PITCHVAR
   if CONTOURLASTWORD = RISING
   for each syllable in word
          add DURVAR to the duration of its phonemes ;
          set the pitch of consonants to MAXPITCH - PITCHVAR
          set the pitch of the vowel to MAXPITCH + PITCHVAR

Set the loudness volume of the complete sentence to VOLUME.
```

FIG. 5

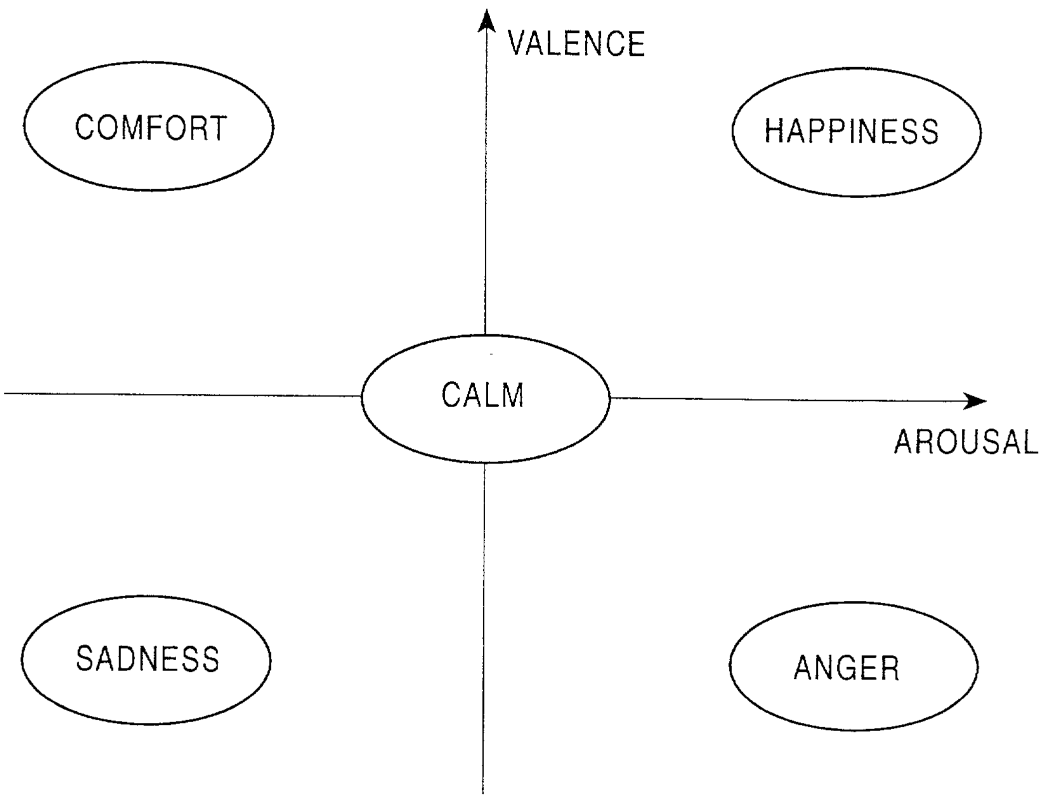

FIG. 6

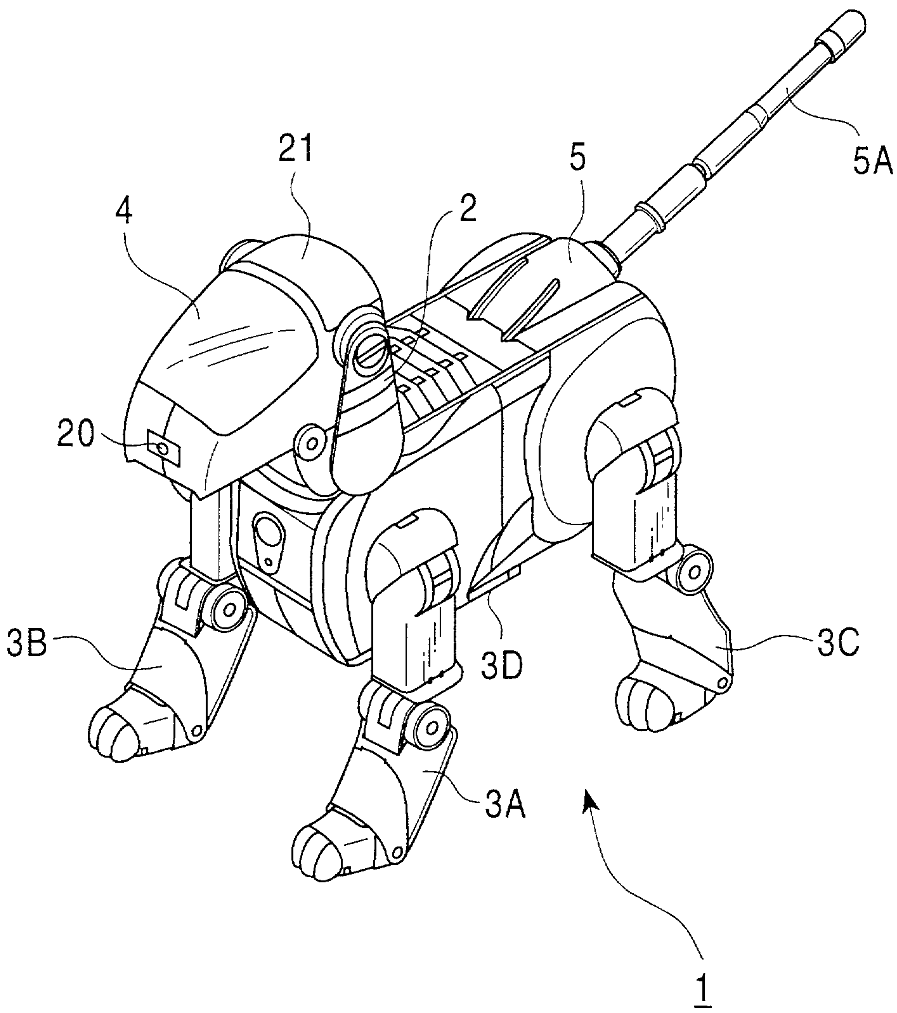

FIG. 7

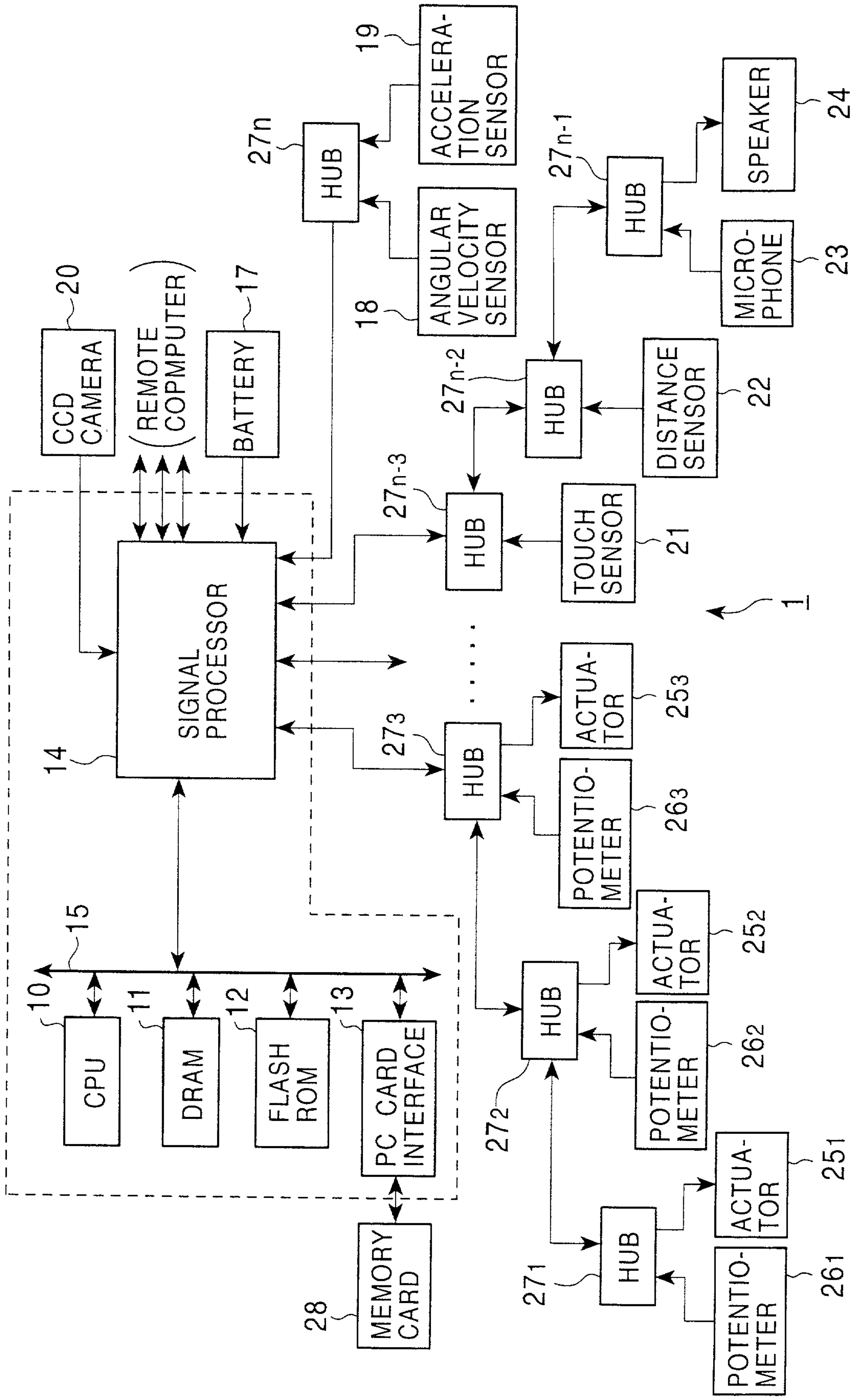
CCD CAMERA
20
REMOTE COPMPUTER
BATTERY
17
SIGNAL PROCESSOR
14
15
CPU
10
DRAM
11
FLASH ROM
12
PC CARD INTERFACE
13
MEMORY CARD
28
HUB
27n
ACCELERATION SENSOR
19
ANGULAR VELOCITY SENSOR
18
HUB
27n-1
SPEAKER
24
MICROPHONE
23
HUB
27n-2
DISTANCE SENSOR
22
HUB
27n-3
TOUCH SENSOR
21
HUB
273
ACTUATOR
253
POTENTIOMETER
263
HUB
272
ACTUATOR
252
POTENTIOMETER
262
HUB
271
ACTUATOR
251
POTENTIOMETER
261
1

FIG. 8

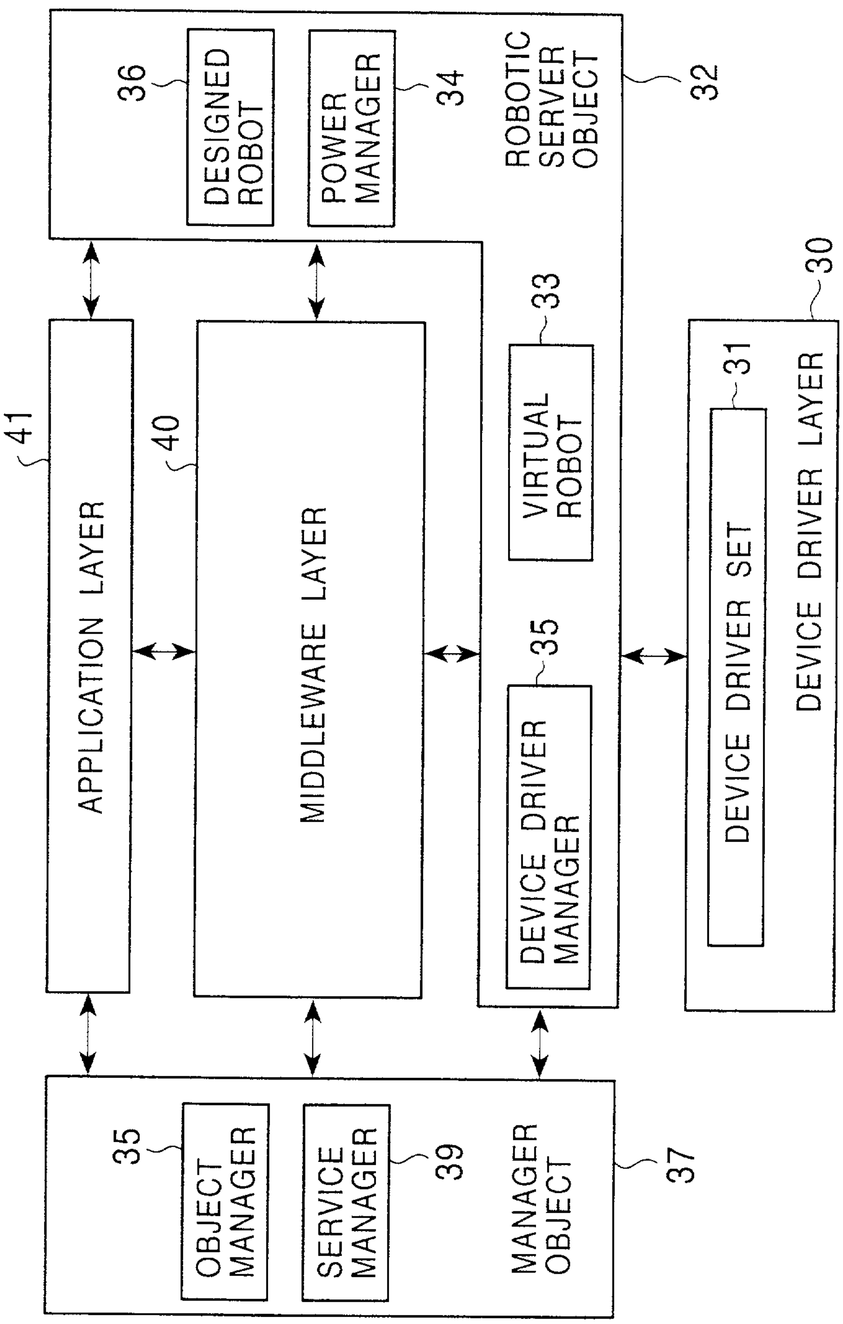
DESIGNED ROBOT
36
POWER MANAGER
34
ROBOTIC SERVER OBJECT
32
APPLICATION LAYER
41
MIDDLEWARE LAYER
40
VIRTUAL ROBOT
33
DEVICE DRIVER MANAGER
35
DEVICE DRIVER SET
31
DEVICE DRIVER LAYER
30
OBJECT MANAGER
35
SERVICE MANAGER
39
MANAGER OBJECT
37

FIG. 9

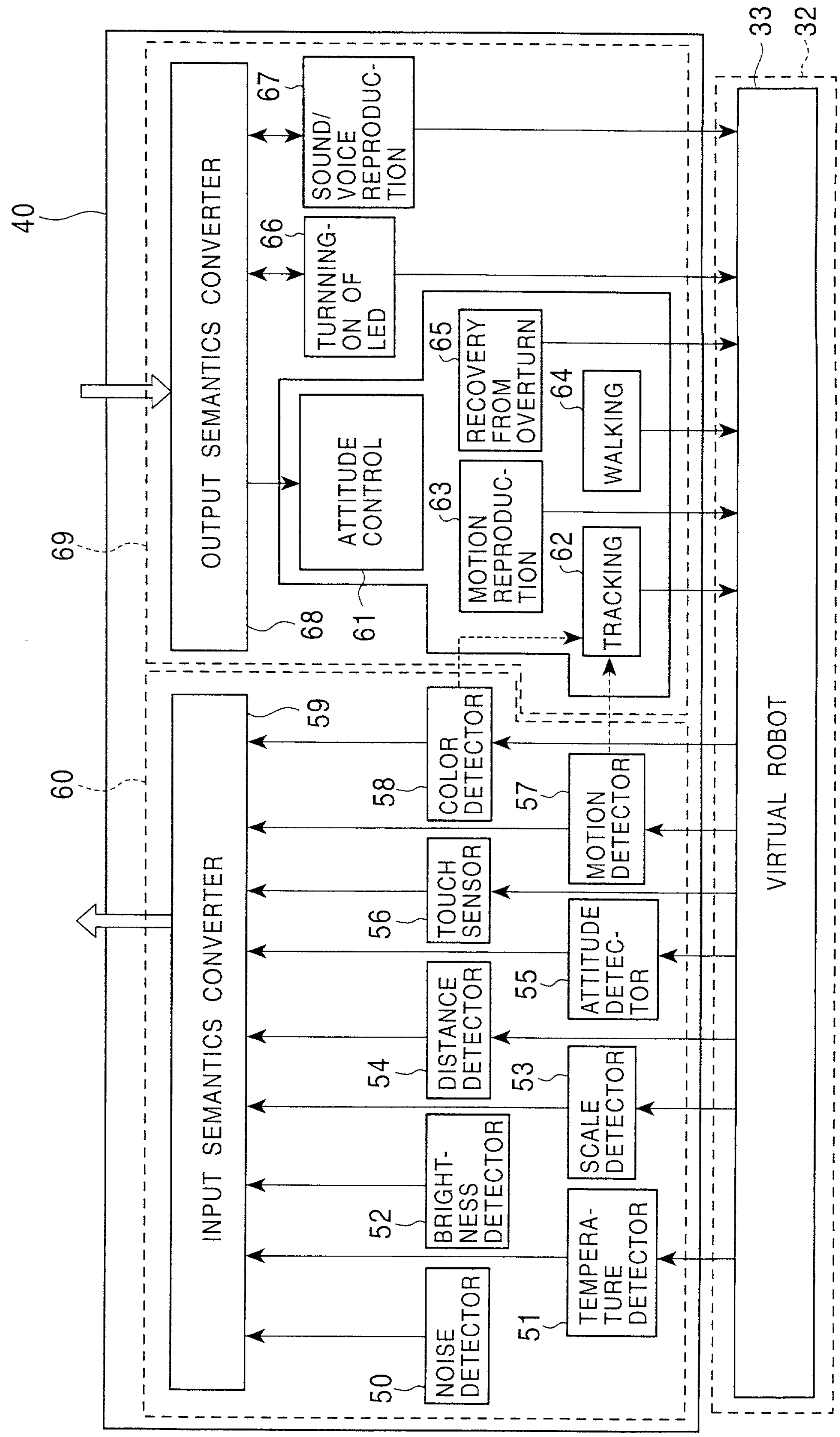

40
69
60
OUTPUT SEMANTICS CONVERTER
68
INPUT SEMANTICS CONVERTER
59
67
SOUND/ VOICE REPRODUC- TION
66
TURNNING- ON OF LED
ATTITUDE CONTROL
61
65
RECOVERY FROM OVERTURN
64
WALKING
63
MOTION REPRODUC- TION
62
TRACKING
58
COLOR DETECTOR
57
MOTION DETECTOR
56
TOUCH SENSOR
55
ATTITUDE DETEC- TOR
54
DISTANCE DETECTOR
53
SCALE DETECTOR
52
BRIGHT- NESS DETECTOR
51
TEMPERA- TURE DETECTOR
50
NOISE DETECTOR
33
32
VIRTUAL ROBOT

FIG. 10

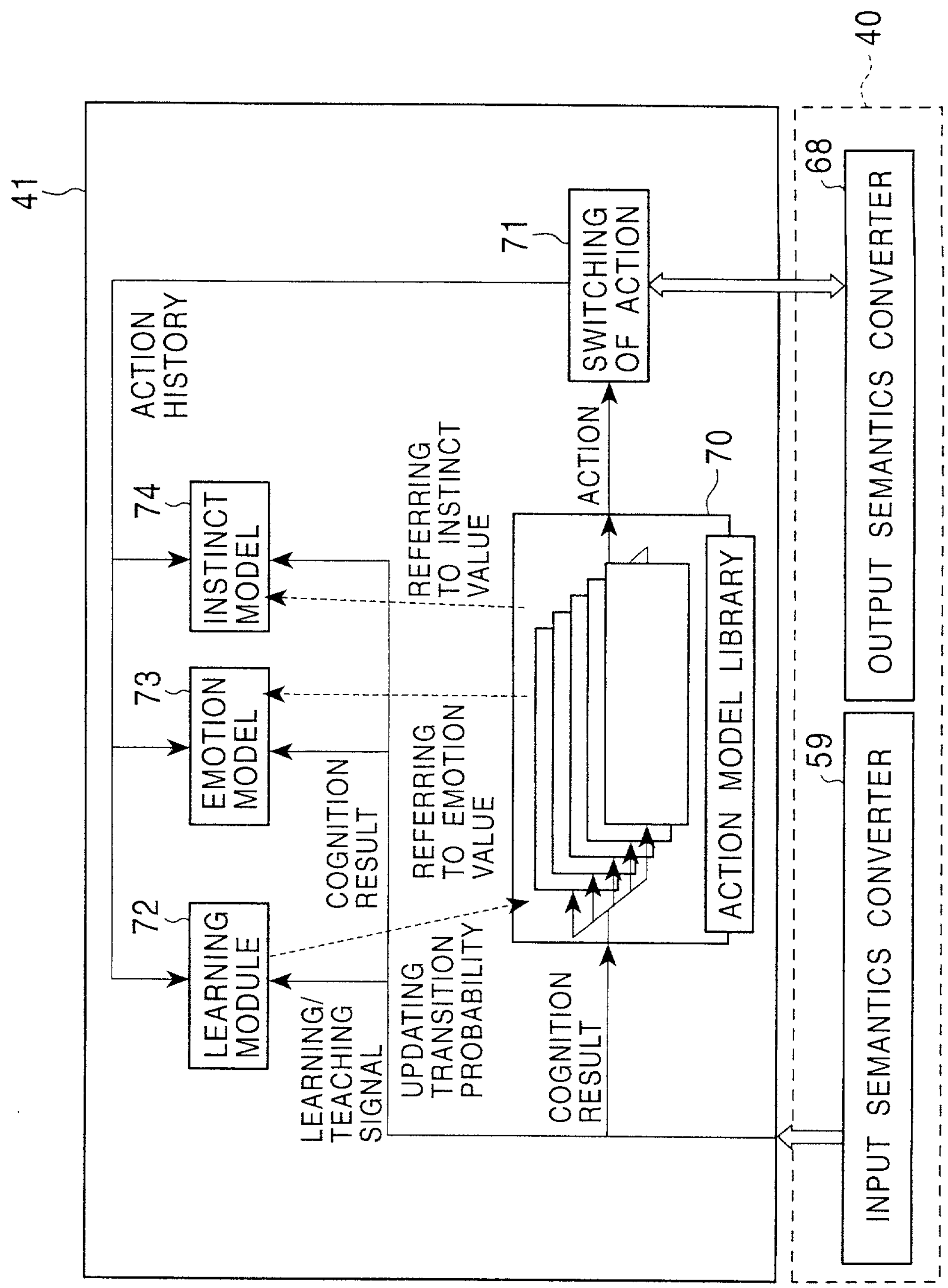

41
40
68
71
SWITCHING OF ACTION
ACTION HISTORY
74
INSTINCT MODEL
73
EMOTION MODEL
72
LEARNING MODULE
REFERRING TO INSTINCT VALUE
REFERRING TO EMOTION VALUE
UPDATING TRANSITION PROBABILITY
COGNITION RESULT
LEARNING/ TEACHING SIGNAL
ACTION
70
ACTION MODEL LIBRARY
59
OUTPUT SEMANTICS CONVERTER
INPUT SEMANTICS CONVERTER

FIG. 11

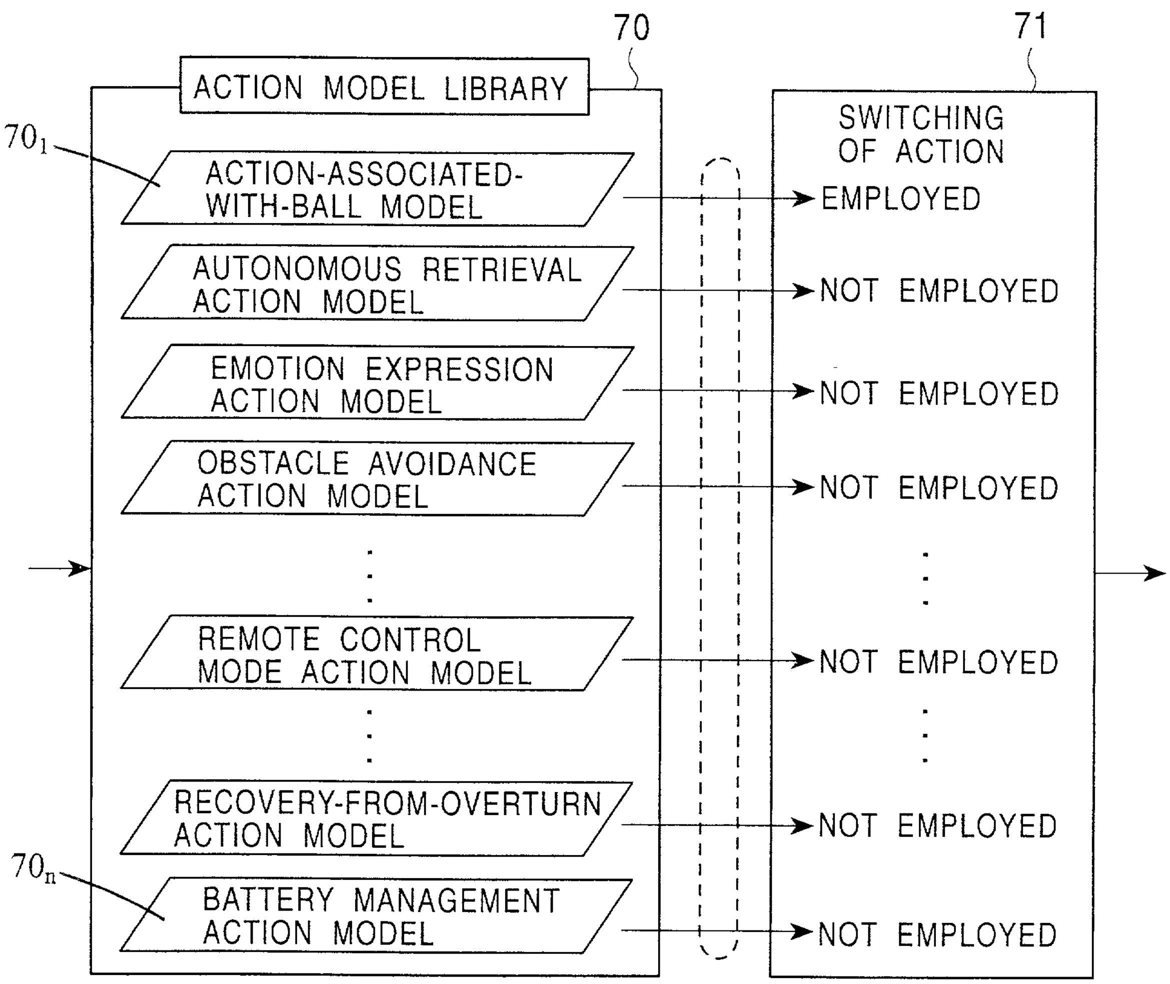
70
71
ACTION MODEL LIBRARY
SWITCHING OF ACTION
$70_1$
ACTION-ASSOCIATED-WITH-BALL MODEL
EMPLOYED
AUTONOMOUS RETRIEVAL ACTION MODEL
NOT EMPLOYED
EMOTION EXPRESSION ACTION MODEL
NOT EMPLOYED
OBSTACLE AVOIDANCE ACTION MODEL
NOT EMPLOYED
REMOTE CONTROL MODE ACTION MODEL
NOT EMPLOYED
RECOVERY-FROM-OVERTURN ACTION MODEL
NOT EMPLOYED
$70_n$
BATTERY MANAGEMENT ACTION MODEL
NOT EMPLOYED

FIG. 12

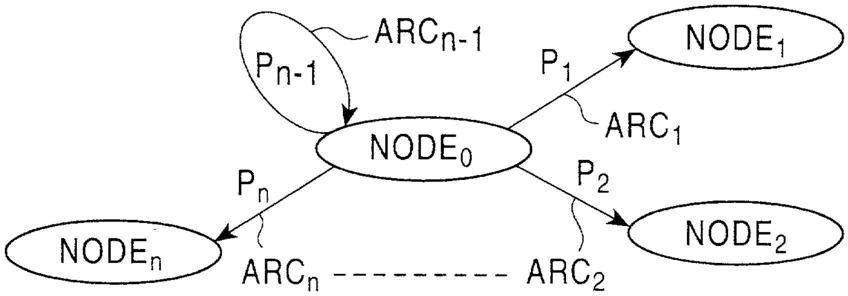

# FIG. 13

| | INPUT EVENT NAME | DATA NAME | RANGE OF DATA | PROBABILITY OF TRANSITION TO OTHER NODES (Di) | | | | | |
|---|---|---|---|---|---|---|---|---|---|
| node 100 | | | | A | B | C | D | | n |
| DESTINATION NODE | | | | node 120 | node 120 | node 1000 | | | node 600 |
| OUTPUT ACTION | | | | ACTION1 | ACTION 2 | MOVE BACK | | | ACTION 4 |
| 1 | BALL | SIZE | 0.1000 | 30 % | | | | | |
| 2 | PAT | | | | 40 % | | | | |
| 3 | HIT | | | | 20 % | | | | |
| 4 | MOTION | | | | | 50 % | | | |
| 5 | OBSTACLE | DISTANCE | 0.100 | | | 100 % | | | |
| 6 | | JOY | 50.100 | | | | | | |
| 7 | | SURPRISE | 50.100 | | | | | | |
| 8 | | SADNESS | 50.100 | | | | | | |
| | | | | | | | | | |

80

# FIG. 14

| | | | | |
|---|---|---|---|---|
| node XXX | | | | |
| Condition-label: | | | | |
| HAPPY | happy > 70 | | | |
| SAD | sad > 70 | | | |
| ANGER | anger > 70 | | | |
| TIMEOUT | timeout.1 | | | |
| Arc-label: | | | | |
| BAZA1 | node YYY | talk_happy, motion_banzai, motion_swingtail | | |
| OTIKOMU | node ZZZ | talk_sad, motion_ljiiji | | |
| BURUBURU | node WWW | talk_anger, motion_buruburu | | |
| AKUBI | node VVV | motion_akubi | | |
| Probabiliy-table: | | | | |
| | BANZAI | OTIKOMU | BURUBURU | AKUBI |
| HAPPY | 100 | | | |
| SAD | | 100 | | |
| ANGER | | | 100 | |
| TIMEOUT | | | | 100 |

DEFINITIONS OF MOTIONS (Arc-label: to AKUBI)

PROBABILITY TABLE (Probabiliy-table: to TIMEOUT)

European Patent Office

# EUROPEAN SEARCH REPORT

Application Number
EP 01 40 1203

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | US 5 860 064 A (HENTON CAROLINE G)<br>12 January 1999 (1999-01-12)<br>* column 3, line 65 - column 4, line 46; figure 5 * | 1,5,7,<br>11,13,18<br>3,4,6,9,<br>10,12,<br>14,16,<br>17,19 | G10L13/04<br>G10L13/02<br>G10L13/08 |
| Y | US 5 029 214 A (HOLLANDER JAMES F)<br>2 July 1991 (1991-07-02)<br>* column 4, line 42 - line 45; claim 1 *<br>* column 21, line 13 - column 24, line 32; table 5 * | 3,4,6,9,<br>10,12,<br>14,16,<br>17,19 | |
| E | EP 1 107 227 A (SONY CORP)<br>13 June 2001 (2001-06-13)<br>* column 8, line 54 - column 9, line 5 *<br>* column 9, line 53 - column 10, line 8 * | 1,3,5-7,<br>9,11-14,<br>16,18,19 | |
| E | EP 1 113 417 A (SONY CORP)<br>4 July 2001 (2001-07-04)<br>* abstract; claims 1,2 * | 1,5-7,<br>11-13,<br>18,19 | **TECHNICAL FIELDS SEARCHED (Int.Cl.7)**<br>G10L |
| A | MORIYAMA ET AL: "Emotion recognition and synthesis system on speech"<br>PROCEEDINGS OF THE INTERNATIONAL CONFERENCE ON MULTIMEDIA COMPUTING AND SYSTEMS, LOS ALAMITOS, CA, US,<br>vol. 1, 7 June 1999 (1999-06-07), pages 840-844, XP002154370<br>* paragraphs '003A!,'003C!; figure 4 * | 1-19 | |

-/--

The present search report has been drawn up for all claims

| Place of search | Date of completion of the search | Examiner |
|---|---|---|
| MUNICH | 10 October 2001 | De Vos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 01 40 1203

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 700 178 A (LONG JENNIFER M ET AL) 23 December 1997 (1997-12-23) * abstract * | 14 | |
| A | * column 7, line 9 - line 11 * | 1,7,13 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 10 October 2001 | De Vos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 40 1203

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2001

| Patent document cited in search report | | Publication date | Patent family member(s) | | Publication date |
|---|---|---|---|---|---|
| US 5860064 | A | 12-01-1999 | NONE | | |
| US 5029214 | A | 02-07-1991 | NONE | | |
| EP 1107227 | A | 13-06-2001 | JP 2001154681 | A | 08-06-2001 |
| | | | EP 1107227 | A2 | 13-06-2001 |
| EP 1113417 | A | 04-07-2001 | JP 2001188553 | A | 10-07-2001 |
| | | | EP 1113417 | A2 | 04-07-2001 |
| | | | US 2001021907 | A1 | 13-09-2001 |
| US 5700178 | A | 23-12-1997 | AU 4060797 | A | 06-03-1998 |
| | | | CA 2234160 | A1 | 19-02-1998 |
| | | | WO 9806470 | A1 | 19-02-1998 |

EPO FORM P0459

For more details about this annex : see Official Journal of the European Patent Office, No. 12/82